# EUROPEAN PATENT APPLICATION

(11) **EP 3 138 388 A1**
(43) Date of publication of application: **08.03.2017**
(21) Application number: 15183510.5
(22) Date of filing: 02.09.2015
(51) Int. Cl.: A01G 9/24

(54) **METHOD AND VENTILATION AND/OR CIRCULATION SYSTEM FOR MIXING AIR AROUND PLANTS IN A GREENHOUSE**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: V.O.

(57) **Abstract**

In a greenhouse (1) air is mixed around plants (2) by means of a ventilation and/or circulation system (5), which comprises an air duct (6A). The air duct comprises a variable passage structure (14, 24) through an outer circumferential wall structure (12, 22) of the air duct. Said mixing is performed in that via said variable passage structure air is exhausted out of the interior of the air duct and in the direction of a row of plants. Each individual plant in the row of plants experiences intermittent spurts of air (8), which spurts of air are caused by exhaust of air from time-dependently varying different exhaust locations (9) of the variable passage structure, while said time-dependently varying different exhaust locations are traveling (30) in the longitudinal air duct direction (7) for exposing all individual plants along the longitudinal row direction (4) to said spurts of air (8).

## Description

The invention relates to mixing air around plants in a greenhouse. More in particular the invention relates to reducing the local humidity in the air directly adjacent to leaves of the plants, by transporting moisture from the boundary layers around the leaves towards the surrounding areas in the greenhouse. The reason for this kind of air mixing is that a too high humidity in said boundary layers increases the risk of plant diseases.

Commonly, reducing the humidity in said boundary layers is done by directing a continuous and moderate ventilation and/or circulation flow towards the plants. However, a drawback of this commonly applied ventilation and/or circulation method is that for many greenhouse configurations the lowest ventilation and/or circulation flow level which is still sufficient for avoiding said risk of plant diseases unfortunately already exceeds a critical flow level at which there arises local plant damage due to dehydration. Such local plant damage appears as dead, brown leaves and often results in poor quality of the greenhouse products.

It is an object of the present invention to provide an efficient solution according to which the humidity in the boundary layers around the leaves of plants in a greenhouse is reduced sufficiently for preventing said plant diseases, while at the same time said local plant damage due to dehydration is prevented.

For that purpose the present invention provides a method according to the appended independent claim 1. Furthermore, the present invention provides a ventilation and/or circulation system according to the appended independent claim 2. Preferable embodiments of the invention are provided by the appended dependent claims 3-6. The method according to the appended independent claim 1 can be perfomed by means of a ventilation and/or circulation system according to any one of the appended dependent claims 2-5, and in a greenhouse according to the appended dependent claim 6.

Hence, the invention provides a method of mixing air around plants in a greenhouse, wherein:
- said plants are arranged in at least one row of plants, which row of plants has a longitudinal row direction;
- said mixing is performed by means of a ventilation and/or circulation system, which comprises at least one air duct, which air duct has a longitudinal air duct direction;
- said air duct comprises a variable passage structure through an outer circumferential wall structure of the air duct, wherein said variable passage structure is extending in said longitudinal air duct direction; and
- said mixing is performed in that via said variable passage structure air is exhausted out of the interior of the air duct and in the direction of the row of plants, in such manner that each individual plant in the row of plants experiences intermittent spurts of air, which spurts of air are caused by exhaust of air from time-dependently varying different exhaust locations of said variable passage structure, while said time-dependently varying different exhaust locations are traveling in said longitudinal air duct direction for exposing all individual plants of the row of plants along said longitudinal row direction to said spurts of air.

Furthermore, the invention provides a ventilation and/or circulation system for mixing air around plants in a greenhouse, which ventilation and/or circulation system comprises at least one air duct, having a longitudinal air duct direction, which air duct comprises a variable passage structure through an outer circumferential wall structure of the air duct, which variable passage structure is extending in said longitudinal air duct direction, and wherein the ventilation and/or circulation system is configured, arranged and effective to exhaust air out of the interior of the air duct via time-dependently varying different exhaust locations of said variable passage structure, while said time-dependently varying different exhaust locations are traveling in said longitudinal air duct direction.

Accordingly, an important working principle used in the present invention is that exposing plants to intermittent spurts of air, as opposed to exposing plants to the commonly used continuous ventilation and/or circulation flow, allows for providing sufficiently effective ventilation and/or circulation for avoiding said risk of plant diseases, while not yet exceeding critical flow conditions where local plant damage due to dehydration would arise. Without wishing to be bound by any theory, it is believed that, every time in-between two spurts of air, the leaves are able to recover from a probable initial stage of dehydration (if any) caused by the spurt of air. In every interval in-between two spurts of air the humidity in the boundary layers is built up again, until the next spurt of air, and so forth. This working principle more or less relates to what happens in nature. That is, plants in open nature are exposed to more or less intermittent gusts of winds, which blow away moisture from the boundary layers around the plant leaves.

In addition to the above-explained effective working principle, the invention provides the further important working principle which relates to said traveling behaviour in said longitudinal air duct direction of the time-dependently varying different exhaust locations of the spurts of air. This traveling behaviour makes the invention a very efficient solution for treating a large amount of plants in a greenhouse. Also this working principle more or less relates to what happens in nature. That is, a gust of wind often hits plants one after the other, e.g. producing a "traveling wave" through a field of plants.

A preferable embodiment of a ventilation and/or circulation system according to the invention is defined in that:
- said air duct comprises an outer cylinder and an inner cylinder, having a circumferential outer cylinder wall and a circumferential inner cylinder wall, respectively;
- the inner cylinder is co-axially mounted within the outer cylinder;
- the outer circumferential wall structure of the air duct comprises a double wall formed by the circumferential outer cylinder wall and the circumferential inner cylinder wall;
- the outer cylinder and the inner cylinder are rotatable relative to one another around their common center line;
- said variable passage structure of said outer circumferential wall structure of the air duct comprises an outer passage structure through the circumferential outer cylinder wall and an inner passage structure through the circumferential inner cylinder wall;
- each of said outer passage structure and said inner passage structure is extending in said longitudinal air duct direction; and
- said outer passage structure and said inner passage structure are configured, arranged and effective to provide said time-dependently varying different exhaust locations of said variable passage structure by means of time-dependently varying different air connections between said outer passage structure and said inner passage structure during said rotation relative to one another around said common center line.

This preferable embodiment is very efficient in that it allows for realizing the traveling of the spurts of air by means of a simple rotative motion and a continuous air supply to the interior of the air duct.

It is noted that the relative rotation between the outer cylinder and the inner cylinder can be realized in that the outer cylinder is fixed relative to the greenhouse while the inner cylinder is rotating relative to the greenhouse, or in that the inner cylinder is fixed relative to the greenhouse while the outer cylinder is rotating relative to the greenhouse, or even in that both the outer cylinder and the inner cylinder are rotating relative to the greenhouse.

In a further preferable embodiment of a ventilation and/or circulation system according to the invention:
- said outer passage structure comprises a helical outer passage structure, which is extending in a helical direction of said outer cylinder; and/or
- said inner passage structure comprises a helical inner passage structure, which is extending in a helical direction of said inner cylinder.

The application of at least one such a helical outer passage structure and/or of at least one such a helical inner passage structure makes the ventilation and/or circulation system very effective and reliable.

In a yet further preferable embodiment of a ventilation and/or circulation system according to the invention that said outer circumferential wall structure of the air duct is transparent for light. This allows the plants in the greenhouse to receive light through said outer circumferential wall structure of the air duct.

The abovementioned aspects and other aspects of the invention will be apparent from and elucidated with reference to the embodiments described hereinafter by way of non-limiting examples only and with reference to the schematic figures in the enclosed drawing.
Fig. 1 shows, in longitudinal cross-sectional view, an example of an embodiment of a ventilation and/or circulation system according to the invention, while carrying out an example of an embodiment of a method according to the invention in a greenhouse.
Fig. 2A shows the air duct of the ventilation and/or circulation system of Fig. 1 in a transverse cross-sectional plane, which is indicated by the arrow II-A in Fig. 1, wherein the view of Fig. 2A is taken in the direction of the arrow II-A.
Fig. 2B shows the air duct of the ventilation and/or circulation system of Fig. 1 in a transverse cross-sectional plane, which is indicated by the arrow II-B in Fig. 1, wherein the view of Fig. 2B is taken in the direction of the arrow II-B.
Fig. 2C shows the air duct of the ventilation and/or circulation system of Fig. 1 in a transverse cross-sectional plane, which is indicated by the arrow II-C in Fig. 1, wherein the view of Fig. 2C is taken in the direction of the arrow II-C.
Fig. 3 shows, in a similar longitudinal cross-sectional view as that of Fig. 1, an example of an embodiment of an alternative air duct, which can be used according to the invention.
Fig. 4 shows the greenhouse of Fig. 1 in a transverse cross-sectional plane, which is parallel to the transverse cross-sectional planes of Figs. 2A, 2B, 2C.
Fig. 5 shows, in a similar transverse cross-sectional view as that of Fig. 4, an example of an embodiment of a further alternative air duct, which can be used according to the invention.

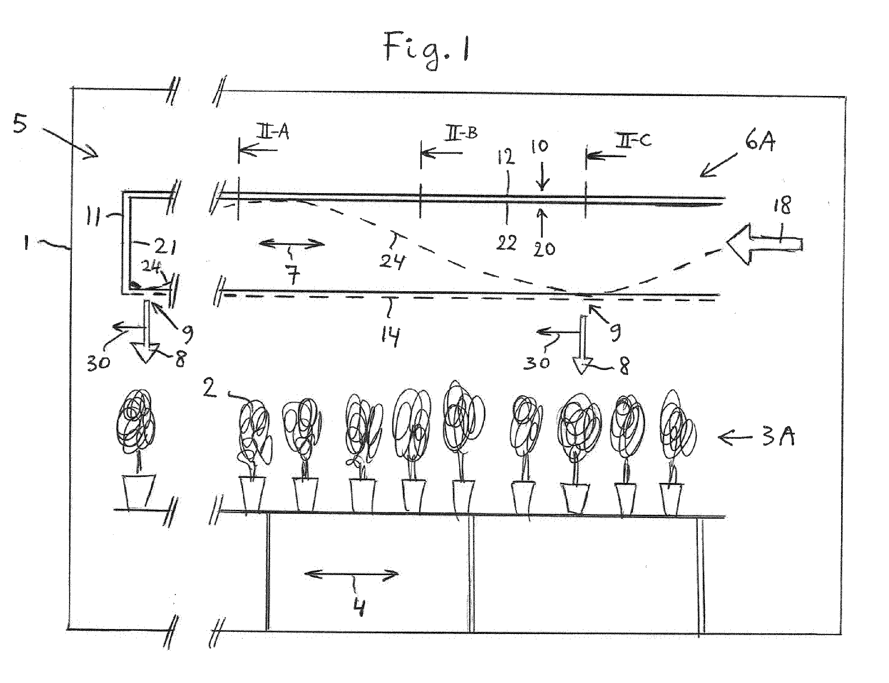

The reference signs used in the abovementioned Figs. 1-5 are referring to the abovementioned parts and aspects of the invention, as well as to related parts and aspects, in the following manner.
- *1*: *greenhouse*
- *2*: *plant*
- *3A, 3B, 3C, 3D*: *rows of plants*
- *4*: *longitudinal row direction*
- *5*: *ventilation and*/*or circulation system*
- *6A, 6B, 6C, 6D; 106A; 206A, 206B*: *air ducts*
- *7*: *longitudinal air duct direction*
- *8*: *spurt of air*
- *9*: *exhaust location*
- *10*: *outer cylinder*
- *11*: *end wall of outer cylinder 10*
- *12*: *circumferential outer cylinder wall*
- *14*: *straight slit passage through circumferential outer cylinder wall 12*
- *114-122*: *straightly in-line circular passages*
- *18*: *air supplier*
- *20*: *inner cylinder*
- *21*: *end wall of inner cylinder 20*
- *22*: *circumferential inner cylinder wall*
- *24*: *helical slit passage through circumferential inner cylinder wall 22*
- *124-132*: *helically aligned circular passages*
- *30*: *traveling direction of exhaust location 9*
- *31*: *rotation direction of inner cylinder 20 relative to outer cylinder 10*

It is noted that, where the same reference signs are used throughout different ones of the abovementioned Figs. 1-5, these reference signs denote the same or similar parts or aspects.

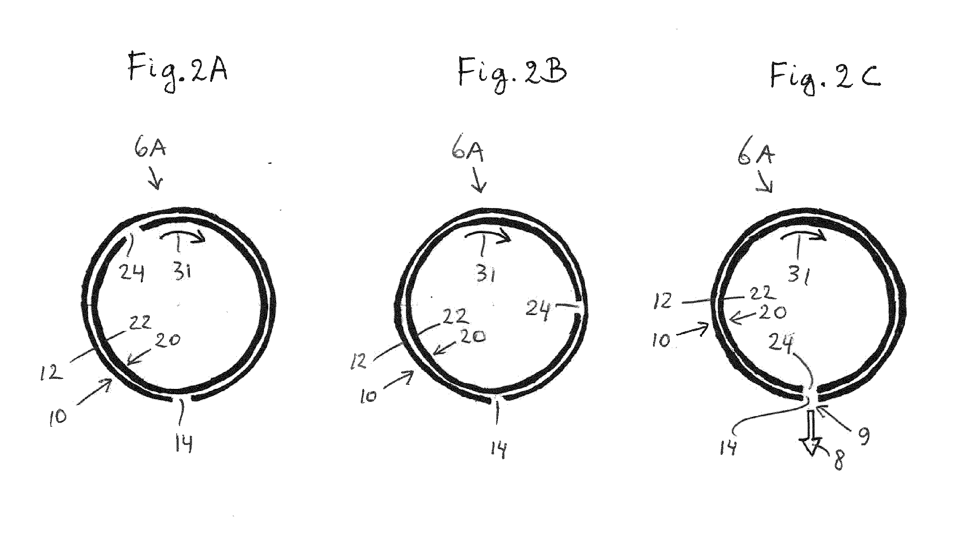

Fig. 1 shows the air duct 6A of the ventilation and/or circulation system 5, wherein the air duct 6A is located above the row 3A of plants 2. The longitudinal air duct direction 7 of air duct 6A is parallel to the longitudinal row direction 4 of the row 3A. In the shown example, the air duct 6A comprises the outer cylinder 10 and the inner cylinder 20, wherein the outer cylinder 10 is fixed relative to the greenhouse 1, while the inner cylinder 20 is rotatable relative to the greenhouse 1. In Fig. 1, the reference numeral 14 at the shown straight dashline indicates the location of the rectangular straight slit passage through the circumferential outer cylinder wall 12 of the outer cylinder 10. This rectangular straight slit passage 14 is located at the bottom of the outer cylinder, see also Figs. 2A-2C. Furthermore, in Fig. 1 the reference numeral 24 at the shown curved dashline indicates the location of the helical slit passage through the circumferential inner cylinder wall 22 of the inner cylinder 20, see also Figs. 2A-2C.

In use, the air supplier 18, which is shown highly schematically in Fig. 1, supplies air into the interior of the air duct 6A. As a result, the row 3A of plants 2 experiences a number of simultaneously occurring air spurts 8 (two of which are shown in Fig. 1), which are travelling in the shown direction 30.

To illustratively show just an arbitrary rough example of a possible practical use of such a ventilation and/or circulation system 5 in a greenhouse 1, the following approximate example parameters are given. The air duct 6A has a length of 85 m in the longitudinal air duct direction 7. The outside diameter of the outer cylinder 10 is 0.45 m. The helical slit passage 24 through circumferential inner cylinder wall 22 has a pitch of 17 m, which means there are 5 helical revolutions over the length of 85 m. Accordingly, there are five exhaust locations 9 where simultaneous air exhaust occurs. The straight slit passage 14 through circumferential outer cylinder wall 12 has a width of 0.08 m. At each exhaust location 9 there occurs air exhaust in a range of 0.4 m as measured in the longitudinal air duct direction 7. At average load of the system, the rotation speed of inner cylinder 20 relative to outer cylinder 10 is 0.5 rpm. Then, the air exhaust speed at the exhaust locations 9 is 5 m/s. At the location of a plant 2 the air velocity will have been dropped into roughly about 2 m/s This means that every individual plant 2 in the row 3A will experience every 2 minutes a spurt of air 8 of about 2 m/s, which spurt of air lasts about 3 s.

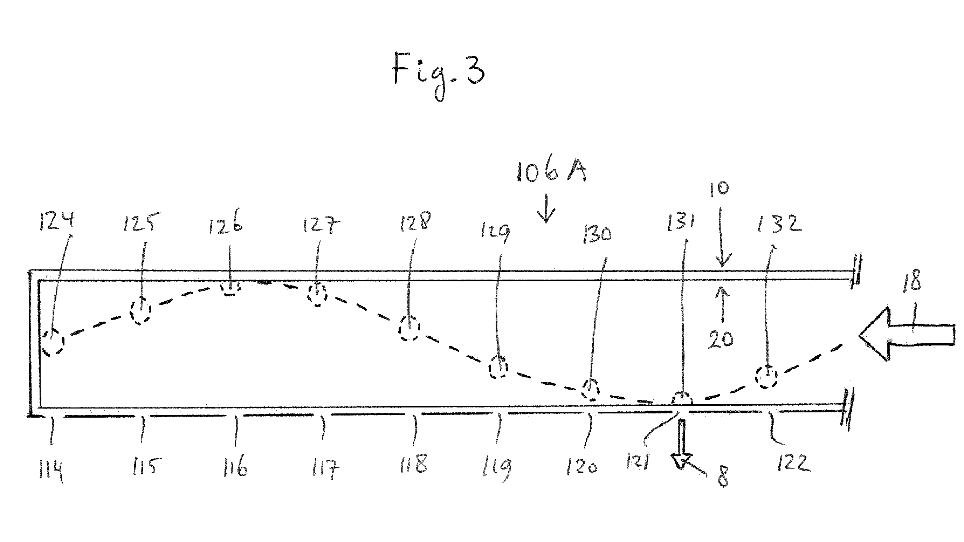

In the example of Figs. 1 and 2, the outer passage structure 14 and the inner passage structure 24 are each elongated continuous passage structures. Fig. 3 serves to illustrate that instead of such elongated continuous passage structures, also discrete passage structures are possible. That is, in Fig. 3 the reference numbers 114-122 indicate the application of a number of discrete circular passages 114-122 instead of the straight slit passage 14 in Figs. 1, 2. Similarly, the reference numbers 124-132 indicate the application of a number of discrete circular passages 124-132 instead of the helical slit passage 24 in Figs. 1, 2. Note that the lastmentioned discrete circular passages 124-132 in Fig. 3 are helically aligned according to a similar helical direction as in Fig. 1 (this helical direction has been indicated in Fig. 3 by a similar curved dash line as in Fig. 1).

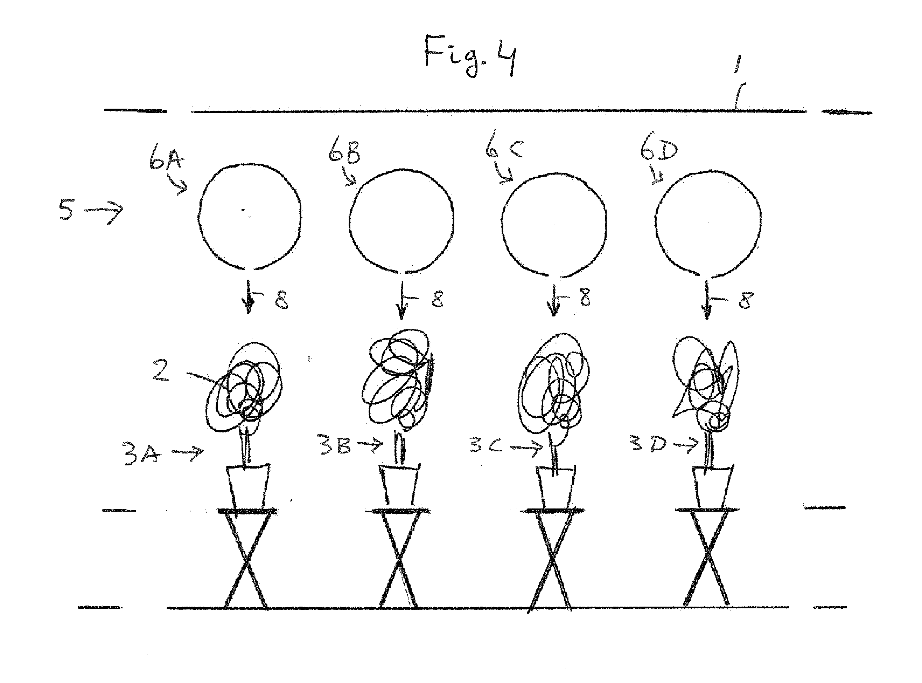

Fig. 4 shows that the ventilation and/or circulation system 5 comprises at least the additional air ducts 6B, 6C, 6D, which are similar to and parallel to air duct 6A, and which are similarly arranged above additional plant rows 3B, 3C, 3D, which are similar to and parallel to plant row 3A. It is noted that different traveling directions 30 of the exhaust locations 9 may be applied for the different air ducts 6A, 6B, 6C, 6D, respectively. For example, the traveling directions 30 for the air ducts 6A and 6C may be chosen to be mutually the same, but opposite to the traveling directions 30 for the air ducts 6B and 6D.

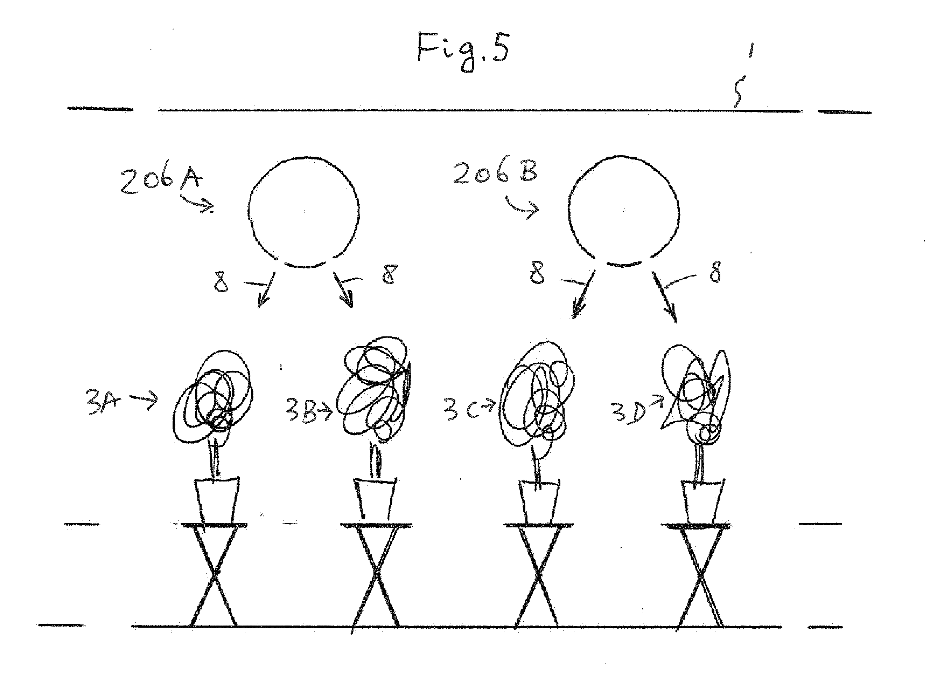

Fig. 5 serves to illustrate that it is also possible that one air duct may serve more than one parallel rows of plants. In the shown example, this may e.g. be realized by using two separate straight slit passages through the circumferential outer cylinder wall of one air duct. Fig. 5 makes clear that each of the air ducts 206A and 206A may have two parallel and mutually spaced straight slit passages similar to the straight slit passage 14 of Figs. 1, 2. It is noted that, in case one would wish to expose the plant rows 3A and 3C in Fig. 5 to traveling directions 30 which are mutually opposite to those to which the plant rows 3B and 3D are exposed (similar to the option discussed above in relation to Fig. 4), this may e.g. be realized by using two separate helically configured inner passage structures through the circumferential inner cylinder wall of one air duct, wherein the pitch directions of these two separate helically configured inner passage structures are mutually opposite.

While the invention has been described and illustrated in detail in the foregoing description and in the drawing figures, such description and illustration are to be considered exemplary and/or illustrative and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single other unit may fulfill the functions of several items recited in the claims. For the purpose of clarity and a concise description, features are disclosed herein as part of the same or separate embodiments, however, it will be appreciated that the scope of the invention may include embodiments having combinations of all or some of the features disclosed. Any reference signs in the claims should not be construed as limiting the scope.

## Claims

1. Method of mixing air around plants (2) in a greenhouse (1), wherein:
- said plants are arranged in at least one row of plants (3A, 3B, 3C, 3D), which row (3A) of plants has a longitudinal row direction (4);
- said mixing is performed by means of a ventilation and/or circulation system (5), which comprises at least one air duct (6A, 6B, 6C, 6D; 106A; 206A, 206B), which air duct (6A) has a longitudinal air duct direction (7);
- said air duct comprises a variable passage structure (14, 24; 114-122, 124-132) through an outer circumferential wall structure (12, 22) of the air duct, wherein said variable passage structure is extending in said longitudinal air duct direction; and
- said mixing is performed in that via said variable passage structure air is exhausted out of the interior of the air duct and in the direction of the row of plants, in such manner that each individual plant in the row of plants experiences intermittent spurts of air (8), which spurts of air are caused by exhaust of air from time-dependently varying different exhaust locations (9) of said variable passage structure, while said time-dependently varying different exhaust locations are traveling (30) in said longitudinal air duct direction (7) for exposing all individual plants of the row of plants along said longitudinal row direction (4) to said spurts of air (8).

2. Ventilation and/or circulation system for mixing air around plants (2) in a greenhouse (1), which ventilation and/or circulation system (5) comprises at least one air duct (6A, 6B, 6C, 6D; 106A; 206A, 206B), having a longitudinal air duct direction (7), which air duct comprises a variable passage structure (14, 24; 114-122, 124-132) through an outer circumferential wall structure (12, 22) of the air duct, which variable passage structure is extending in said longitudinal air duct direction, and wherein the ventilation and/or circulation system is configured, arranged and effective to exhaust air out of the interior of the air duct via time-dependently varying different exhaust locations (9) of said variable passage structure, while said time-dependently varying different exhaust locations are traveling (30) in said longitudinal air duct direction.

3. Ventilation and/or circulation system according to claim 2, wherein:
- said air duct (6A) comprises an outer cylinder (10) and an inner cylinder (20), having a circumferential outer cylinder wall (12) and a circumferential inner cylinder wall (22), respectively;
- the inner cylinder is co-axially mounted within the outer cylinder;
- the outer circumferential wall structure of the air duct comprises a double wall formed by the circumferential outer cylinder wall (12) and the circumferential inner cylinder wall (22);
- the outer cylinder (10) and the inner cylinder (20) are rotatable (31) relative to one another around their common center line;
- said variable passage structure of said outer circumferential wall structure of the air duct comprises an outer passage structure (14; 114-122) through the circumferential outer cylinder wall (12) and an inner passage structure (24; 124-132) through the circumferential inner cylinder wall (22);
- each of said outer passage structure and said inner passage structure is extending in said longitudinal air duct direction (7); and
- said outer passage structure and said inner passage structure are configured, arranged and effective to provide said time-dependently varying different exhaust locations (9) of said variable passage structure by means of time-dependently varying different air connections between said outer passage structure and said inner passage structure during said rotation (31) relative to one another around said common center line.

4. Ventilation and/or circulation system according to claim 3, wherein:
- said outer passage structure comprises a helical outer passage structure, which is extending in a helical direction of said outer cylinder; and/or
- said inner passage structure comprises a helical inner passage structure (24; 124-132), which is extending in a helical direction of said inner cylinder (20).

5. Ventilation and/or circulation system according to any one of claims 2-4, wherein said outer circumferential wall structure (12, 22) of the air duct (6A) is transparent for light.

6. Greenhouse comprising a ventilation and/or circulation system (5) according to any one of claims 2-5.
